# FASCICULE DE BREVET EUROPEEN

(11) **EP 2 817 951 B1**
(45) Date de publication et mention de la délivrance du brevet: **04.01.2017**
(21) Numéro de dépôt: 13705474.8
(22) Date de dépôt: 21.02.2013
(51) Int. Cl.: H04M 1/725, H04L 29/06, G06Q 20/32

(54) **SYSTEME DE TELECOMMUNICATION**
TELEKOMMUNIKATIONSSYSTEM
TELECOMMUNICATION SYSTEM

(30) Priorité: 22.02.2012 EP 12305210
(43) Date de publication de la demande: 31.12.2014
(73) Titulaire: Gemalto SA, 92190 Meudon (FR)
(72) Inventeur: ZEAMARI, Ali, F-13705 La Ciotat (FR); BALOCCO, Sébastien, F-13705 La Ciotat (FR); RADE, Daniel, F-13705 La Ciotat (FR); FRANCHI, Christophe, F-13705 La Ciotat (FR)
(74) Mandataire: Scheer, Luc
(86) Numéro de dépôt international: PCT/EP2013/053497
(87) Numéro de publication internationale: WO 2013/124383

(56) Documents cités:
- EP-A1- 2 334 025
- US-A1- 2008 121 687
- "Smart Cards; UICC Application Programming Interface (UICC API) for Java CardÂ (Release 8); ETSI TS 102 241", ETSI STANDARD, EUROPEAN TELECOMMUNICATIONS STANDARDS INSTITUTE (ETSI), SOPHIA ANTIPOLIS CEDEX, FRANCE, vol. SCP-WG3, no. V8.0.0, 1 juin 2008 (2008-06-01), XP014042003,

## Description

Le domaine de l'invention est celui des télécommunications et concerne notamment un système de communication via une interface sans fil entre un dispositif intelligent et un terminal portable. Le terminal portable, constitué par exemple par un téléphone mobile ou un smartphone, coopère avec un élément de sécurité renfermant une application apte à établir une communication sans fil avec le dispositif intelligent.

L'application comprise dans l'élément de sécurité coopérant avec le terminal portable sera par la suite appelée première application.

L'invention concerne également un procédé de communication mis en oeuvre dans un tel système, un dispositif intelligent et un élément de sécurité correspondants.

L'invention trouve une application particulière dans le domaine de la maintenance d'appareils ou de machines, tels que des distributeurs de boissons, des machines à laver, des véhicules automobiles, ou en général toute machine ne comportant pas d'interface homme-machine permettant d'assurer sa maintenance ou de connaître son état. L'invention s'applique également aux machines de petite taille ou aux systèmes embarqués non accessibles ou difficilement accessibles à un utilisateur, par exemple à un agent de maintenance ou un réparateur. L'invention s'applique généralement à toute machine ou appareil dont un utilisateur souhaite modifier le fonctionnement ou connaître l'état, par exemple suite à un disfonctionnement.

On connaît des dispositifs intelligents de type tags fixés sur ou à proximité d'affiches publicitaires ou à proximité d'oeuvres d'art. La lecture de ces tags par un téléphone mobile, par exemple par NFC (« Near Field Communication » en anglais - « Communication par champ proche » en français) pour des tags NFC, permet à une application comprise dans le téléphone mobile d'afficher sur l'écran du téléphone une page Internet dont l'adresse (URL) est comprise dans le tag. Un serveur Web est à cet effet compris dans le téléphone mobile, par exemple dans son élément de sécurité (carte SIM, USIM ou UICC en général). La page Internet affiche par exemple des informations complémentaires sur le produit ou service faisant objet de la publicité ou des informations sur l'oeuvre d'art ou son auteur.

Habituellement, le tag comprend une mémoire qui est lue par le téléphone mobile. Il existe également des tags actifs qui comprennent des microprocesseurs aptes à réaliser des opérations complexes. Ces microprocesseurs peuvent contenir des applications destinées à interpréter des commandes reçues par le téléphone mobile.

L'invention propose d'exploiter une technologie similaire afin d'établir une communication sans fil, par exemple de type NFC, entre un dispositif intelligent et un terminal portable classique, par exemple un téléphone mobile ou un smartphone, ce dispositif intelligent étant apposé ou fixé sur ou à proximité d'un élément, tel qu'une machine une affiche publicitaire, ...

On connaît par le document US 2008/0121687 un système de communication via une interface sans fil entre un dispositif intelligent et un terminal portable coopérant avec un élément de sécurité renfermant une application, appelée première application, apte à établir une communication sans fil avec le dispositif intelligent.

Selon la présente invention :
- le dispositif intelligent comprend une application toolkit apte à transmettre via l'interface sans fil une commande toolkit à l'élément de sécurité, lorsque la communication entre la première application et le dispositif intelligent est établie ;
- la première application comprend des moyens pour transmettre la commande toolkit reçue de l'application toolkit au terminal portable pour exécution de la commande toolkit par ce dernier.

L'interface sans fil est préférentiellement une interface NFC.

Dans un mode de réalisation avantageux, le dispositif intelligent est un tag.

Dans un autre mode de réalisation, le dispositif intelligent et/ou l'élément de sécurité est un e-UICC ou un UICC.

Le dispositif intelligent coopère préférentiellement avec une machine ou avec une affiche publicitaire.

Le terminal portable est avantageusement un smartphone.

L'invention concerne également un procédé de communication via une interface sans fil entre un dispositif intelligent et un terminal portable coopérant avec un élément de sécurité renfermant une application, appelée première application, apte à établir une communication sans fil avec le dispositif intelligent. Selon l'invention, le procédé consiste à :
- transmettre à partir d'une application toolkit comprise dans le dispositif intelligent, via l'interface sans fil, une commande toolkit à l'élément de sécurité, lorsque la communication entre la première application et le dispositif intelligent est établie ;
- transmettre la commande toolkit reçue par la première application au terminal portable pour exécution de la commande toolkit par ce dernier.

L'invention concerne aussi un dispositif intelligent destiné à communiquer via une interface sans fil avec un terminal portable coopérant avec un élément de sécurité renfermant une application, appelée première application, apte à communiquer via l'interface sans fil avec le dispositif intelligent, ce dispositif intelligent comprenant une application toolkit apte à transmettre, via l'interface sans fil, une commande toolkit à l'élément de sécurité, lorsque la communication entre la première application et le dispositif intelligent est établie.

Enfin, l'invention concerne un élément de sécurité comprenant une application, appelée première application, apte à établir une communication via une interface sans fil avec un dispositif intelligent, l'élément de sécurité coopérant avec un terminal portable, la première application étant apte à :
- recevoir via l'interface sans fil une commande toolkit transmise par une application toolkit comprise dans le dispositif intelligent, lorsque la communication entre la première application et le dispositif intelligent est établie ;
- transmettre la commande toolkit reçue au terminal portable pour exécution de la commande toolkit par ce dernier.

D'autres caractéristiques et avantages de l'invention apparaîtront à la lecture de la description suivante d'un mode de mise en oeuvre de l'invention, donné à titre illustratif et non limitatif, et des figures annexées dans lesquelles :
- La figure 1 représente un système mettant en oeuvre le procédé selon la présente invention ;
- La figure 2 détaille le système de la figure 1.

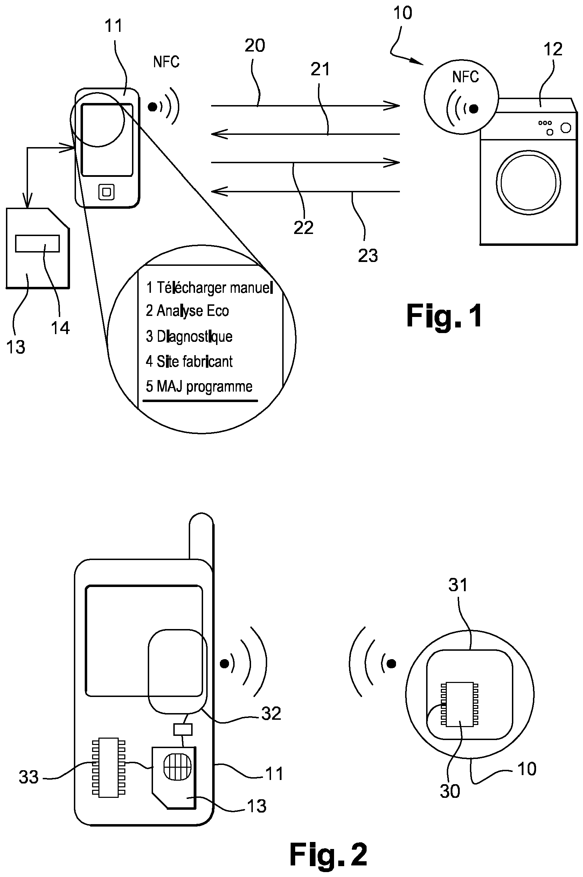

La figure 1 représente un système de communication via une interface sans fil entre un dispositif intelligent 10 et un terminal portable 11.

Le dispositif intelligent 10 est par exemple un tag NFC fixé sur ou à proximité d'un élément 12 tel qu'une machine. Une machine à laver le linge est ici représentative de l'élément 12, le tag 10 pouvant être fixé sur la machine 12 ou être intégré dans cette machine 12.

La communication sans fil est ici de type NFC mais tout type de communication sans fil entre le dispositif intelligent 10 et le terminal portable 11 est possible. Il peut par exemple s'agit d'une communication de type Bluetooth ou infrarouge (telle que standardisée par l'IRDA).

Le terminal portable 11 coopère avec un élément de sécurité 13 de type UICC ou e-UICC (pour « Embedded UICC » en anglais - « UICC intégré » en français). Un e-UICC se distingue d'un UICC classique par le fait qu'il est intégré dans le terminal 11 et non séparable de celui-ci. Il s'agit typiquement d'un UICC soudé. Il peut également s'agir d'un UICC ou d'un e-UICC déporté, communiquant par ondes radio avec le terminal 11, par exemple selon le système connu sous le nom d'eGo. Un tel système est notamment décrit dans la demande de brevet européenne n°11306055 déposée le 18 août 2011 et intitulée «Dispositif de communication à travers le corps personnalisable par accessoire ».

Cet élément de sécurité 13 comprend de manière connue les identifiants IMSI/Ki permettant au détenteur du terminal 11 de s'authentifier auprès du réseau de son opérateur de téléphonie mobile.

L'élément de sécurité 13 renferme une application 14, appelée première application, apte à établir une communication sans fil avec le dispositif intelligent 10. Selon l'invention, le dispositif intelligent 10 comprend une application toolkit apte à transmettre via l'interface sans fil une commande toolkit (telle que définie dans le standard ETSI 102.223) à l'élément de sécurité 13 lorsque la communication sans fil entre la première application 14 et le dispositif intelligent 10 est établie. En NFC, cette communication s'établit en approchant le terminal 11 du dispositif intelligent 10. La première application 14 de l'élément de sécurité 13 initie l'envoi d'une commande par l'application toolkit du dispositif intelligent 10. Le dispositif intelligent 10 est alors en mode lecture et est alimenté par le champ magnétique généré par l'antenne NFC comprise dans le terminal 11, cette antenne étant reliée à l'élément de sécurité du terminal 11.

La première application 14 comprend des moyens pour transmettre au terminal 11 la commande toolkit reçue de l'application toolkit embarquée dans le dispositif 10. Cette première application 14 ne fait donc que retransmettre au terminal 11, sans l'exécuter, la commande toolkit reçue. Le terminal 11, à réception de la commande toolkit transmise par le dispositif intelligent 10 via l'élément de sécurité 13, exécute la commande toolkit reçue.

La commande toolkit peut être de différents types connus. A titre d'exemple, il peut s'agir d'une commande de type « Display text » par laquelle le terminal 11 affiche sur son écran un texte prédéfini, une commande « Send SMS » par laquelle le terminal 11 transmet un SMS à destination d'un numéro prédéterminé, une commande de type « Launch browser » pour que le terminal 11 ouvre un canal de communication IP à l'aide de l'adresse URL de la machine 12,...

Sur la figure 1, un exemple de système de communication est représenté. Lors d'une étape 20, l'élément de sécurité 13 (ou plutôt la première application 14) du terminal 11 détecte la présence du tag 10 et sélectionne une application avec un AID donné. Cette application est celle renfermée par le tag 10 permettant de communiquer avec la première application 14. En réponse à cette sélection, l'application toolkit du tag 10 répond, lors d'une étape 21, en lui fournissant une liste de menus disponibles. Cette liste, représentée sur la figure 1, propose par exemple à l'utilisateur plusieurs choix :
- 1. de télécharger le manuel utilisateur de la machine 12 ;
- 2. d'effectuer une analyse de l'impact écologique de la machine 12 ;
- 3. d'établir un diagnostique de la machine 12 ;
- 4. d'établir une liaison Internet vers le site du fabriquant de la machine 12;
- 5. d'effectuer une mise à jour du programme de fonctionnement de la machine 12.

Ces choix sont affichés sur l'écran du terminal 11 et invitent l'utilisateur à effectuer une sélection. La sélection de l'utilisateur est transmise, lors d'une étape 22, à l'application toolkit du tag 10 et celle-ci répond, lors d'une étape 23 (envoi d'un lien et d'une commande pour télécharger le manuel utilisateur, envoi d'un diagnostic ou d'une adresse Internet, envoi d'une adresse Internet et d'une commande de mise à jour de son programme de fonctionnement).

Toutes les commandes envoyées par le tag 10 sont des commandes de type toolkit qui sont relayées de l'application 14 vers le terminal 11 pour y être exécutées. Le tag 10 communique avec la machine 12 lorsqu'il est prévu pour offrir une maintenance de cette machine 12, c'est-à-dire lorsqu'un échange de données est nécessaire entre le tag 10 et la machine 12.

Ceci n'est pas le cas si la fonction du tag 10 est limitée à l'envoi d'une adresse URL permettant par exemple à l'utilisateur de télécharger le manuel expliquant le fonctionnement de la machine 12. Ceci est également valable pour un élément intelligent 10 fixé sur un élément tel qu'une affiche publicitaire. L'élément intelligent, par exemple sous la forme d'un tag NFC, transmet à un terminal apte à lire un tag NFC une commande toolkit comprenant une adresse URL, par exemple l'adresse URL de l'annonceur.

Comme précédemment indiqué, le tag 10 peut être fixé sur la machine 12, par exemple comporter une surface autocollante, ou être intégré dans la machine 12. Dans ce dernier cas, une zone de localisation du tag 10 à l'intérieur de la machine 12 est prévue sur l'habillage extérieur de la machine 12 afin que l'utilisateur sache où il doit approcher son terminal 11, dans le cas d'une communication en champ proche.

Le tag 10 est, dans un mode de réalisation avantageux, connecté à un élément, par exemple au microprocesseur, de la machine 10. Ceci permet notamment de réaliser les fonctions de diagnostique ou de maintenance référencées 2, 3 et 5 sur la figure 1 (il n'est pas nécessaire d'avoir un dispositif intelligent connecté pour les fonctions 1 et 4 puisqu'il s'agit, pour ces fonctions, d'envoyer une simple URL au terminal 11 afin qu'il se connecte à un site distant). Il est notamment avantageux d'intégrer l'application toolkit de l'élément intelligent dans le microprocesseur de la machine 12. Ainsi, ce microprocesseur gère non seulement le fonctionnement de la machine, mais également la communication, par exemple de type NFC, avec le terminal 11. Il suffit alors de connecter une antenne à ce microprocesseur et de lui intégrer l'application toolkit.

Le dispositif intelligent 10 peut également être constitué par un UICC ou un e-UICC connecté à un modem équipant l'appareil 12 (application M2M). Ce modem sert à dialoguer avec l'UICC connecté à la machine 12 à partir d'un site distant, typiquement une plate-forme OTA. L'e-UICC peut également être intégré au microprocesseur de l'appareil 12.

La communication du terminal 11 vers le dispositif intelligent 10 peut également être réalisée sous forme de commandes toolkit. Les commandes toolkit sont alors formatées par la première application 14 et transmises au dispositif 10.

L'invention permet d'utiliser des commandes toolkit au niveau de l'application 14 et donc au niveau de l'UICC 13. Comme l'UICC est naturellement conçu pour envoyer des commandes toolkit, la mise en oeuvre de l'invention est très simple à réaliser. En standardisant des tags pour qu'ils communiquent en toolkit, il est ainsi possible d'établir des communications entre des terminaux portables, tels que des téléphones mobiles ou des smartphones, et des machines, en exploitant la capacité naturelle des UICCs (ou e-UICCs) de communiquer par des commandes toolkit avec ces terminaux.

Au niveau de l'utilisateur, l'utilisation de l'invention est très simple : il lui suffit de télécharger, par exemple par OTA, une application dédiée à la communication avec un élément équipé d'un dispositif intelligent 10 selon l'invention. Cet élément peut être une simple affiche publicitaire ou une machine, tel que par exemple un véhicule automobile. Le dispositif intelligent 10 est spécifique à chaque élément avec lequel il coopère. Par exemple, toutes les affiches publicitaires montrant une publicité donnée seront équipées avec le même dispositif intelligent qui répondra invariablement à chaque interrogation de la première application par le terminal 11. De même, toutes les machines d'un même modèle et d'une même marque (de machine à laver ou de véhicule) seront équipées du même dispositif intelligent et proposeront donc invariablement le même menu à l'utilisateur du terminal 11. Cette machine est par exemple un véhicule automobile, un téléviseur, un distributeur de boissons, un terminal M2M de type compteur d'électricité ou de gaz,... La machine étant pourvue d'un dispositif intelligent tel que décrit précédemment, elle est capable de communiquer avec le terminal de l'utilisateur.

L'invention permet, pour l'utilisateur, de grandement simplifier la lecture de dispositifs intelligents car une seule et unique application est installée au niveau de l'élément de sécurité 13 du terminal 11, cette application permettant de lire tous types de dispositifs intelligents (tags, UICCs, e-UICCs,...) coopérants avec des éléments aussi différents que des affiches publicitaires, des plans de métro, des machines, ..

Le dispositif intelligent peut également se présenter sous la forme d'une carte sans contact, non nécessairement fixée ou solidaire d'une machine. L'inconvénient de cette solution est que la carte sans contact peut être égarée et c'est pourquoi il est préférable de solidariser le dispositif intelligent d'un élément dont on souhaite obtenir une information (par exemple une adresse URL d'un publicitaire, dans le cas d'une affiche publicitaire).

La figure 2 représente des détails du système de communication de la figure 1.

Dans cette figure 2, le dispositif intelligent 10 est constitué par un tag comprenant une puce 30, par exemple un microprocesseur, connectée à une antenne 31. La puce 30 renferme l'application toolkit qui formate les commandes toolkit à destination de l'élément de sécurité 13. Ce dernier est connecté à une antenne 32, afin d'établir la liaison sans fil, par exemple de type NFC, avec le dispositif 10. La puce 30 est ou non connectée à un élément tel qu'une machine ou une affiche publicitaire.

L'élément de sécurité 13 coopère avec le microprocesseur 33 du terminal 11, ce microprocesseur étant notamment en charge d'exécuter et d'afficher les commandes toolkit reçues (via l'UICC 13) du dispositif 10 sur l'écran du terminal 11.

L'invention concerne également un procédé de communication via une interface sans fil, par exemple de type NFC, entre un dispositif intelligent 10 et un terminal portable 11 coopérant avec un élément de sécurité 13 renfermant une application 14, appelée première application, cette première application 14 étant apte à établir une communication sans fil avec le dispositif intelligent 10, ce procédé consistant à :
- transmettre à partir d'une application toolkit comprise dans le dispositif intelligent 10, via l'interface sans fil, une commande toolkit à l'élément de sécurité 10, lorsque la communication entre la première application 14 et le dispositif intelligent 10 est établie ;
- transmettre la commande toolkit reçue par la première application 14 au terminal portable 11 pour exécution de cette commande toolkit.

## Revendications

1. Système de communication via une interface sans fil entre un dispositif intelligent (10) et un terminal portable (11) coopérant avec un élément de sécurité (13) renfermant une application (14), appelée première application, apte à établir une communication sans fil avec ledit dispositif intelligent (10), **caractérisé en ce que** :
- ledit dispositif intelligent (10) comprend une application toolkit apte à transmettre via ladite interface sans fil une commande toolkit audit élément de sécurité (13), lorsque ladite communication entre ladite première application (14) et ledit dispositif intelligent (10) est établie ;
- ladite première application (14) comprend des moyens pour transmettre la commande toolkit reçue de ladite application toolkit audit terminal portable (11) pour exécution de ladite commande toolkit par ce dernier (11).

2. Système selon la revendication 1, **caractérisé en ce que** ladite interface sans fil est une interface NFC.

3. Système selon l'une des revendications 1 et 2, **caractérisé en ce que** ledit dispositif (10) intelligent est un tag.

4. Système selon l'une des revendications 1 et 2, **caractérisé en ce que** ledit dispositif intelligent (10) est un e-UICC ou un UICC.

5. Système selon l'une des revendications 1 à 4, **caractérisé en ce que** ledit dispositif intelligent (10) coopère avec une machine (12).

6. Système selon l'une des revendications 1 à 4, **caractérisé en ce que** ledit dispositif intelligent (10) coopère avec une affiche publicitaire.

7. Système selon l'une des revendications 1 à 6, **caractérisé en ce que** ledit terminal portable (11) est un smartphone.

8. Système selon l'une des revendications 1 à 7, **caractérisé en ce que** ledit élément de sécurité est un UICC ou un e-UICC.

9. Procédé de communication via une interface sans fil entre un dispositif intelligent (10) et un terminal portable (11) coopérant avec un élément de sécurité (13) renfermant une application (14), appelée première application, apte à établir une communication sans fil avec ledit dispositif intelligent (10), **caractérisé en ce qu'**il consiste à :
- transmettre à partir d'une application toolkit comprise dans ledit dispositif intelligent (10), via ladite interface sans fil, une commande toolkit audit élément de sécurité (13), lorsque ladite communication entre ladite première application (14) et ledit dispositif intelligent (10) est établie ;
- transmettre la commande toolkit reçue par ladite première application (14) audit terminal portable (11) pour exécution de ladite commande toolkit par ce dernier (11).

10. Dispositif intelligent (10) destiné à communiquer via une interface sans fil avec un terminal portable (11) coopérant avec un élément de sécurité (13) renfermant une application (14), appelée première application, apte à communiquer via ladite interface sans fil avec ledit dispositif intelligent (10), **caractérisé en ce qu'**il comprend une application toolkit apte à transmettre, via ladite interface sans fil, une commande toolkit audit élément de sécurité (13), lorsque ladite communication entre ladite première application (14) et ledit dispositif intelligent (10) est établie.

11. Elément de sécurité (13) comprenant une application (14), appelée première application, apte à établir une communication via une interface sans fil avec un dispositif intelligent (10), ledit élément de sécurité (13) coopérant avec un terminal portable (11), **caractérisé en ce que** ladite première application (14) est apte à :
- recevoir via ladite interface sans fil une commande toolkit transmise par une application toolkit comprise dans ledit dispositif intelligent (10), lorsque ladite communication entre ladite première application (14) et ledit dispositif intelligent (10) est établie ;
- transmettre la commande toolkit reçue audit terminal portable (11) pour exécution de ladite commande toolkit par ce dernier (11).

## Patentansprüche

1. Kommunikationssystem mit drahtloser Schnittstelle zur Kommunikation zwischen einer intelligenten Vorrichtung (10) und einem tragbaren Terminal (11), das mit einem Sicherheitselement (13) zusammenwirkt und eine Anwendung (14), genannt die erste Anwendung, enthält, wobei diese in der Lage ist, eine drahtlose Verbindung zu besagter intelligenter (10) Vorrichtung herzustellen, **dadurch gekennzeichnet, dass**:
- besagte intelligente Vorrichtung (10) eine Toolkit-Anwendung enthält, die über die drahtlose Schnittstelle einen Toolkit-Befehl an das Sicherheitselement (13) übermitteln kann, nachdem die Verbindung zwischen der ersten Anwendung (14) und der intelligenten Vorrichtung (10) hergestellt wurde;
- besagte erste Anwendung (14) Mittel zur Übermittlung des von der Toolkit-Anwendung im tragbaren Terminal (11) empfangenen Toolkit-Befehls umfasst, damit der Toolkit-Befehl durch letzteres (11) ausgeführt wird.

2. System nach Anspruch 1, **dadurch gekennzeichnet, dass** besagte drahtlose Schnittstelle eine NFC-Schnittstelle ist.

3. System nach einem der Ansprüche 1 und 2, **dadurch gekennzeichnet, dass** besagte intelligente Vorrichtung (10) ein Tag ist.

4. System nach einem der Ansprüche 1 oder 2, **dadurch gekennzeichnet, dass** besagte intelligente Vorrichtung (10) ein e-UICC oder UICC ist.

5. System nach einem der Ansprüche 1 bis 4, **dadurch gekennzeichnet, dass** besagte intelligente Vorrichtung mit einer Maschine (12) zusammen wirkt.

6. System nach einem der Ansprüche 1 bis 4, **dadurch gekennzeichnet, dass** besagte intelligente Vorrichtung (10) mit einem Werbeplakat zusammenwirkt.

7. System nach einem der Ansprüche 1 bis 6, **dadurch gekennzeichnet, dass** besagtes tragbares Terminal (11) ein Smartphone ist.

8. System nach einem der Ansprüche 1 bis 7, **dadurch gekennzeichnet, dass** besagtes Sicherheitselement ein UICC oder ein e-UICC ist.

9. Kommunikationsverfahren mit drahtloser Schnittstelle zur Herstellung einer Verbindung zwischen einer intelligenten Vorrichtung (10) und einem tragbaren Terminal (11), das mit einem Sicherheitselement (13) mit Anwendung (14), genannt erste Anwendung, zusammenwirkt, wobei diese eine drahtlose Verbindung zu besagter intelligenter Vorrichtung (10) herstellen kann, **dadurch gekennzeichnet, dass** es darin besteht:
- ausgehend von einer in der intelligenten Vorrichtung (10) enthaltenen Toolkit-Anwendung über besagte drahtlose Schnittstelle einen Toolkit-Befehl an besagtes Sicherheitselement (13) zu übermitteln, nachdem die Verbindung zwischen der ersten Anwendung (14) und der intelligenten Vorrichtung (10) hergestellt wurde;
- den von der ersten Anwendung (14) erhaltenen Toolkit-Befehl an besagtes tragbares Terminal (11) zwecks Ausführung des Toolkit-Befehls in letzterem (11) zu übermitteln.

10. Intelligente Vorrichtung (10), die dazu bestimmt ist, über eine drahtlose Schnittstelle mit einem tragbaren Terminal (11) zu kommunizieren, das mit einem Sicherheitselement (13) mit Anwendung (14), genannt erste Anwendung, zusammenwirkt, wobei diese in der Lage ist, über besagte drahtlose Schnittstelle mit besagter intelligenter Vorrichtung (10) zusammen zu wirken, **dadurch gekennzeichnet, dass** es eine Toolkit-Anwendung enthält, die über die drahtlose Schnittstelle einen Toolkit-Befehl an das Sicherheitselement (13) übermitteln kann, nachdem die Verbindung zwischen der ersten Anwendung (14) und der intelligenten Vorrichtung (10) hergestellt wurde.

11. Sicherheitselement (13) mit einer Anwendung (14), genannt erste Anwendung, das in der Lage ist, über eine drahtlose Schnittstelle eine Verbindung zu einer intelligenten Vorrichtung (10) herzustellen, wobei besagtes Sicherheitselement (13) mit einem tragbaren Terminal (11) zusammenwirkt, **dadurch gekennzeichnet, dass** die erste Anwendung (14) in der Lage ist:
- über die drahtlose Schnittstelle einen über die Toolkit-Anwendung der intelligenten Vorrichtung (10) übermittelten Toolkit-Befehl zu empfangen, nachdem die Verbindung zwischen der ersten Anwendung (14) und der intelligenten Vorrichtung (10) hergestellt wurde;
- den in besagtem tragbaren Terminal (11) empfangenen Toolkit-Befehl zwecks Ausführung des Toolkit-Befehls durch letzteres (11) zu übermitteln.

## Claims

1. A system for communication via a wireless interface between a smart device (10) and a portable terminal (11) cooperating with a security element (13) containing an application (14), referred to as the first application, able to establish a wireless communication with said smart device (10), **characterised in that**:
- said smart device (10) comprises a toolkit application able to transmit a toolkit command via said wireless interface to said security element (13), when said communication between said first application (14) and said smart device (10) is established;
- said first application (14) comprises means for transmitting the toolkit command received from said toolkit application to said portable terminal (11) for execution of said toolkit command by the latter (11).

2. A system according to claim 1, **characterised in that** said wireless interface is an NFC interface.

3. A system according to one of claims 1 and 2, **characterised in that** said smart device (10) is a tag.

4. A system according to one of claims 1 and 2, **characterised in that** said smart device (10) is an e-UICC or a UICC.

5. A system according to one of claims 1 to 4, **characterised in that** said smart device (10) cooperates with a machine (12).

6. A system according to one of claims 1 to 4, **characterised in that** said smart device (10) cooperates with an advertising display.

7. A system according to one of claims 1 to 6, **characterised in that** said portable terminal (11) is a smartphone.

8. A system according to one of claims 1 to 7, **characterised in that** said security element is a UICC or an e-UICC

9. A method for communication via a wireless interface between a smart device (10) and a portable terminal (11) cooperating with a security element (13) containing an application (14), referred to as the first application, able to establish a wireless communication with said smart device (10), **characterised in that** it consists of:
- transmitting a toolkit command, from a toolkit application included in said smart device (10), via said wireless interface, to said security element (13), when said communication between said first application (14) and said smart device (10) is established;
- transmitting the toolkit command received by said first application (14) to said portable terminal (11) for execution of said toolkit command by the latter (11).

10. A smart device (10) intended to communicate via a wireless interface with a portable terminal (11) cooperating with a security element (13) containing an application (14), referred to as the first application, able to communicate via said wireless interface with said smart device (10), **characterised in that** it comprises a toolkit application able to transmit a toolkit command, via said wireless interface, to said security element (13), when said communication between said first application (14) and said smart device (10) is established.

11. A security element (13) comprising an application (14), referred to as the first application, able to establish a communication with a smart device (10) via a wireless interface, said security element (13) cooperating with a portable terminal (11), **characterised in that** said first application (14) is able to:
- receive, via said wireless interface, a toolkit command transmitted by a toolkit application included in said smart device (10), when said communication between said first application (14) and said smart device (10) is established;
- transmit the toolkit command received to said portable terminal (11) for execution of said toolkit command by the latter (11).
